# EUROPÄISCHE PATENTSCHRIFT

(11) **EP 3 782 953 B1**
(45) Veröffentlichungstag und Bekanntmachung des Hinweises auf die Patenterteilung: **26.07.2023**
(21) Anmeldenummer: 20192092.3
(22) Anmeldetag: 21.08.2020
(51) Int. Cl.: B66F 9/075, B66F 9/24, H02M 3/335, H02M 3/00

(54) **FLURFÖRDERZEUG MIT EINEM EINBAULADEGERÄT**
INDUSTRIAL TRUCK WITH A BUILT-IN CHARGER
CHARIOT DE MANUTENTION DOTÉ D'UN CHARGEUR INTÉGRÉ

(30) Priorität: 22.08.2019 DE 102019122659
(43) Veröffentlichungstag der Anmeldung: 24.02.2021
(73) Patentinhaber: Jungheinrich Aktiengesellschaft, 22047 Hamburg (DE)
(72) Erfinder: Petersen, Marinus, 24536 Neumünster (DE); Wetegrove, Ralf, 22850 Hamburg (DE); Warncke, Matthias, 21073 Hamburg (DE)
(74) Vertreter: Hauck Patentanwaltspartnerschaft mbB

(56) Entgegenhaltungen:
- EP-A1- 1 657 106
- EP-A2- 3 229 307
- US-A1- 2011 194 206
- US-A1- 2012 163 052
- US-A1- 2016 052 410
- US-A1- 2018 123 360
- US-A1- 2018 170 207

## Beschreibung

Die vorliegende Erfindung betrifft ein Flurförderzeug mit einem Einbauladegerät, das über ein Kabel mit einer externen Spannungsquelle verbunden werden kann, um eine an Bord befindliche Batterie zu laden. Bei einer externen Spannungsquelle kann es sich um eine herkömmliche Steckdose handeln.

Flurförderzeuge werden zunehmend mit Lithium-Ionen-Batterien angetrieben, die für Schnell- und Zwischenladevorgänge beispielsweise mit einem C-Faktor von 1 C geeignet sind. Gerade im Mehrschichtbetrieb der Fahrzeuge sind Schnell- und Zwischenladevorgänge sehr hilfreich, für den kontinuierlichen Betrieb der Fahrzeugflotte.

Bevorzugt kann ein Flurförderzeug hierbei an eine übliche Steckdose, wie beispielsweise eine Schuko-Steckdose angeschlossen werden, dies macht es erforderlich, dass die Leistungselektronik des Ladegeräts fahrzeugseitig an Bord angeordnet ist. Kritisch für die Verwendung solcher an Bord befindlicher Ladegeräte ist der begrenzte Bauraum im Fahrzeug und die auf Grund der hohen Leistungsdichte abzuführende Wärmemenge.

Aus EP 2 781 012 B1 ist eine Gleichrichterschaltung bekannt, die Elemente einer Stromverdopplerschaltung einsetzt, unter anderem für ein induktives Ladesystem.

Aus CN 201122859 ist eine 24-V Ladegerät bekannt geworden, dass für eine stabile Gleichstromausgangsspannung eine Kompensation für die Restwelligkeit besitzt.

Aus EP 2 618 449 A2 ist ein System bekannt, mit dem eine Niederspannungsbatterie aus einer Hochspannungsbatterie geladen werden kann. Hierzu wird ein currentdoubler mit gekoppelten Induktivitäten eingesetzt.

Aus EP 1 657 106 ist ein Ladegerät für ein Flurförderzeug mit einer Drehstromsteuerung bekannt geworden. Die Drehstromsteuerung dient zum Umsetzen einer Batteriespannung für die Asynchronmaschine, wobei ein Netzenergiemodul über einen Durchflusswandler eine Wechselspannung an einer oder zwei Motoranschlussleitungen anlegt, wobei der Ladestrom über die Halbbrücken-Drehstromsteuerung gleichgerichtet wird. Die Induktivitäten der Asynchronmaschine dienen als Drossel.

Aus US 2016/0052410 A1 ist ein Fahrzeugladesystem bekannt, bei dem ein Ladevorgang im Hinblick auf den Ladezustand der Batterie optimiert ist.

Aus US 2011/0194206 A1 ist ein Gleichstromumrichter bekannt, der unter leichter Last einen Wirkungsgrad für die Leistungsumwandlung besitzt.

Der Erfindung liegt die Aufgabe zu Grunde ein Flurförderzeug mit einem Einbauladegerät bereitzustellen, das bei geringem Bauraum einen hohen Wirkungsgrad besitzt.

Erfindungsgemäß wird die Aufgabe durch ein Flurförderzeug mit den Merkmalen aus Anspruch 1 gelöst. Vorteilhafte Ausgestaltungen bilden die Gegenstände der Unteransprüche.

Das erfindungsgemäße Flurförderzeug ist mit einem Einbauladegerät ausgestattet, das über ein Kabel mit einer externen Spannungsquelle verbunden werden kann, um eine an Bord befindliche Batterie des Flurförderzeugs zu laden. Das Einbauladegerät besitzt einen Resonanzwandler mit einer Vollbrücke, deren Transistoren als GaN-Transistoren ausgebildet sind. Ferner ist ein Transformator vorgesehen, auf dessen Sekundärseite ein Stromdoppler mit zwei gekoppelten Induktivitäten vorgesehen ist. Die Verwendung eines Resonanzwandlers ermöglicht einen sehr hohen Wirkungsgrad, da eine resonante LLC Topologie beispielsweise bei 0 V (zero voltage switching ZVS) verlustarm geschaltet werden kann. Des Weiteren erlaubt der Resonanzwandler eine sehr kompakte Bauweise, da die Schaltfrequenz der GaN-Transistoren der Frequenz des Stroms im Resonanzkreis entspricht. Aufgrund der geringen Schaltverluste von GaN-Transistoren kann diese Frequenz sehr hoch, deutlich höher als 100 kHz gewählt werden. Zudem besitzt die Verwendung eines Resonanzwandlers in einem kompakt gebauten Flurförderzeug den Vorteil, dass eine elektromagnetische Störaussendung deutlich reduziert werden kann, wenn im Nulldurchgang geschaltet wird. Hinzu kommt, dass die Realisierung der sekundärseitigen Induktivitäten als gekoppelte Induktivitäten eine deutliche Verbesserung der Ausgangsstromwelligkeit erzielt.

In einer bevorzugten Weiterbildung des erfindungsgemäßen Flurförderzeugs ist auch der Stromdoppler mit zwei GaN-Transistoren ausgestattet.

Eine besondere Eigenschaft des erfindungsgemäßen Flurförderzeugs liegt darin, dass die zu ladende Batterie eine Spannung von weniger als 100 V, bevorzugt von weniger als 80 V besitzt. Bei Flurförderzeugen übliche Batteriespannungen sind beispielsweise 24 V, 40 V oder 80 V. Ferner tritt an dem Einbauladegerät ausgangsseitig ein Stromfluss mit einer Stärke von 70 A mehr, bevorzugt können es auch 100 A oder mehr sein, auf. Derartig große Ladeströme sind eine besondere Herausforderung für die Leistungselektronik und erfordern gerade bei einer hohen Leistungsdichte besonders aufeinander abgestimmte Schaltungen. Durch den Einsatz von GaN Transistoren liegt eine höhere Schaltfrequenz als bei konventionellen Silizium-Halbleitern vor, da die Verlustenergien bei einem Schaltvorgang deutlich geringer sind. Durch die Verwendung von gekoppelten Induktivitäten wird bei gleichem Bauvolumen im Vergleich zu diskreten Induktivitäten die Welligkeit des Ausgangsstroms reduziert. In einer Systemauslegung gilt es stets, den bestmöglichen Kompromiss zwischen der Schaltfrequenz der GaN-Transistoren und den Eigenschaften der gekoppelten Induktivitäten zu finden. Die beiden Größen hängen damit direkt zusammen.

Die Anwendung in Flurförderzeugen ist dadurch gekennzeichnet, dass ausgangsseitig vergleichsweise geringe Spannungen aber hohe Ströme auftreten. Hohe Schaltfrequenzen im Zusammenhang mit hohen Strömen im Transformator führen zu hohen Verlusten im Kernmaterial (Ummagnetisierung). Durch die Verwendung von gekoppelten Induktivitäten auf der Sekundärseite gleichen sich die Ströme durch die beiden Zweige des Current Doublers aus und damit auch die Ströme der beiden Halbwellen im Transformator. Ohne diesen Ausgleich würde es bei der hohen verwendeten Schaltfrequenz, die bei GaN-Halbleitern zum Einsatz kommt, zu einer möglichen thermischen Überbelastung des Transformators kommen.

In einer bevorzugten Ausgestaltung ist das Einbauladegerät mit einem C-Faktor von mehr als 0,5 C ausgestattet. Der C-Faktor gibt die maximalen Lade- und Entladeströme unter bestimmten Randbedingungen an, die SI-Einheit lautet s-1. Bei einem C-Faktor von beispielsweise 2 C und einer Batteriekapazität von 3 Ah ergibt sich dann ein maximaler Ladestrom von 6 A. Ein C-Faktor von mehr als 0,5 C, beispielsweise 1,0 C erlaubt ein Schnellladen oder eine Zwischenladung von Lithium-Ionen-Batterien. Die GaN-Transistoren und die gekoppelten Induktivitäten wirken zusammen. Für einen OnBoard-Charger in Flurförderzeugen (insbesondere in kleinen Fahrzeugen wie Kommissionierern, Deichselstaplern etc.) ist der zur Verfügung stehende Bauraum stark begrenzt. Zusammen mit den Anforderungen an eine schnelle Ladung von Li-Ionen Batterien mit beispielsweise 1C ergeben sich daraus sehr hohe Anforderungen an die Leistungsdichte. Diese lassen sich nur erfüllen, wenn GaN-Transistoren in Kombination mit gekoppelten Induktivitäten zum Einsatz kommen.

Insbesondere im Hinblick auf die großen Ladeströme ist es zweckmäßig eine aktive Kühlung für die Leistungselektronik vorzusehen.

Das erfindungsgemäße Flurförderzeug ist bei dem Anschluss an eine externe Spannungsquelle beispielsweise an eine Wechselspannungsquelle mit beispielsweise 230 V anschließbar. Hierbei handelt es sich bevorzugt um eine herkömmliche Steckdose. Bevorzugt sind die an Bord befindlichen Batterien am Förderzeug Lithium-Ionen- oder andere Feststoffbatterien, die über das Einbauladegerät geladen werden.

Die vorstehende Erfindung wird nachfolgend an einem Ausführungsbeispiel näher erläutert. Es zeigt:
- Fig.1: ein erfindungsgemäßes Flurförderzeug mit einem Einbauladegerät und
- Fig. 2: ein Schaltbild zu dem Einbauladegerät.

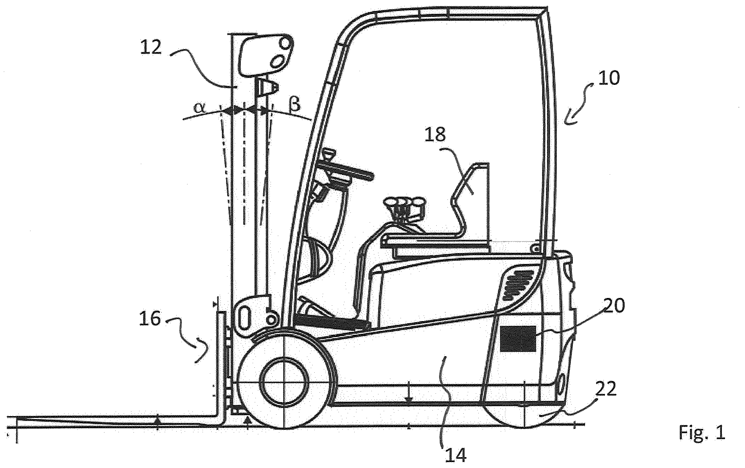

Fig. 1 zeigt ein Flurförderzeug 10 mit einem neigbaren Hubgerüst 12 in einer Ansicht von der Seite. Das Flurförderzeug 10 besitzt ein Antriebsteil 14 und ein Lastteil 16 zu dem das Hubgerüst 12 gehört. Das Antriebsteil 14 besitzt eine Lithium-Ionen-Batterie (nicht dargestellt), die beispielsweise im Raum unter dem Fahrersitz 18 angeordnet sein kann. Ein Einbauladegerät 20 ist schematisch dargestellt, in dem Ausführungsbeispiel ist es oberhalb des hinteren Antriebsrades 22 positioniert.

Nicht dargestellt in Fig. 1 ist ein Ladekabel, mit dem das Flurförderzeug 10 mit einer herkömmlichen 230V Steckdose verbunden werden kann. Anstelle eines externen Ladekabels, kann auch vorgesehen sein, dass das Fahrzeug mit einem internen Ladekabel ausgestattet ist, das bei Bedarf herausgezogen und mit einer externen Steckdose verbunden werden kann. Bevorzugt ist für ein solches internes Ladekabel auch eine automatische Aufwickeleinrichtung für das Kabel vorgesehen.

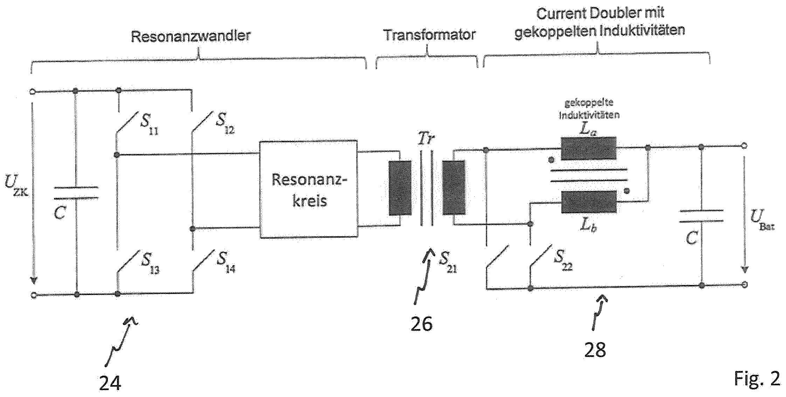

Fig. 2 zeigt das Schaltbild des Einbauladegeräts 20. In dem Schaltbild liegt die externe Spannung U_{zk} an einem Resonanzwandler 24 an. Der Resonanzwandler 24 besitzt vier Transistoren Sn, S₁₂, S₁₃ und S₁₄, die als GaN-Transistoren ausgebildet sind. Die Schaltfrequenz der GaN-Transistoren, die der Frequenz des Stromes im Resonanzkreis entspricht ist aufgrund der geringen Schaltverluste der GaN-Transistoren auch in einem Bereich von über 100 kHz möglich. Durch die hohe Schaltfrequenz können die passiven Bauelemente wie beispielsweise der Transformator 26 sehr kompakt gebaut werden. Sekundärseitig ist ein Stromverdoppler mit gekoppelten Induktivitäten Lₐ, L_{b} vorgesehen. Der Stromdoppler 28 besitzt zwei Transistoren S₂₁, S₂₂, die bevorzugt ebenfalls als GaN-Transistoren ausgebildet sind. Ausgangsseitig liegt an dem Stromdoppler die Batteriespannung U_{Bat} an. Die Batteriespannung beträgt je nach Ausbildung des Flurförderzeugs beispielsweise 24, 40 oder 80 V.

Der vorgestellte Aufbau eines Einbauladegeräts bietet eine große Reihe von Vorteilen gerade auch gegenüber sonstigen Einbauladegeräten. Durch die vergleichsweise niedrigen Batteriespannungen ist der ausgangsseitige Stromfluss im Einbauladegerät sehr hoch und kann 100 A deutlich übersteigen. Wird eine Batterie mit einer Batteriespannung von 24 V beispielsweise an einer Schuko-Steckdose mit 3,6 kW geladen, so treten Ströme von 150 A auf. Bei einem dreiphasigen Anschluss (CEE) mit 16 Ampere und 11 kW treten für ein Flurförderzeug mit einer Batteriespannung von 48 V Ströme von 230 A auf.

Soweit bei Einbauladegeräten bisher resonante Topologien eingesetzt werden, kommt häufig ein Standardhochfrequenztransformator mit einem Vollbrückengleichrichter oder ein Transformator mit Mittenabgriff in Frage. Nachteil dieser resonanten Topologien ist ein niedriger Wirkungsgrad. Vollbrückengleichrichter weisen deutliche Schaltverluste auf, da der Strom jeweils durch zwei Dioden fließt. Transformatoren mit Mittenabgriff sind aufwändig zu konstruieren und ihre Sekundärrichtung ist permanent bestromt, was zu hohen Verlusten insbesondere bei hohen Strömen führt.

## Patentansprüche

1. Flurförderzeug mit einem Einbauladegerät, das über ein Kabel mit einer externen Spannungsquelle verbunden werden kann, um eine an Bord befindliche Batterie zu laden, wobei
1. das Einbauladegerät einen Resonanzwandler mit einer Vollbrücke aufweist, deren Transistoren als GaN-Transistoren ausgebildet sind, wobei der Resonanzwandler eine resonante LLC-Topologie aufweist, und
2. ein Transformator vorgesehen ist,
3. auf dessen Sekundärseite ein Stromdoppler mit zwei gekoppelten Induktivitäten (Lₐ, L_{b}) vorgesehen ist.

2. Flurförderzeug nach Anspruch 1, **dadurch gekennzeichnet, dass** der Stromdoppler mit zwei GaN-Transistoren ausgestattet ist.

3. Flurförderzeug nach Anspruch 1 oder 2, **dadurch gekennzeichnet, dass** die zu ladende Batterie eine Spannung von weniger als 100 V besitzt, bevorzugt 80 V oder weniger.

4. Flurförderzeug nach einem der Ansprüche 1 bis 3, **dadurch gekennzeichnet, dass** der ausgangsseitige Stromfluss eine Stromstärke von 70 A oder mehr, bevorzugt von 100 A oder mehr besitzt.

5. Flurförderzeug nach einem der Ansprüche 1 bis 4, **dadurch gekennzeichnet, dass** das Einbauladegerät einen C-Faktor von mehr als 0,5 C besitzt.

6. Flurförderzeug nach einem der Ansprüche 1 bis 5, **dadurch gekennzeichnet, dass** eine aktive Kühlung für die Leistungselektronik vorgesehen ist.

7. Flurförderzeug nach einem der vorausgehenden Ansprüche, **dadurch gekennzeichnet, dass** ein 230 V Wechselspannungsanschluss als externe Spannungsquelle vorgesehen ist.

8. Flurförderzeug nach einem der vorausgehenden Ansprüche, **dadurch gekennzeichnet, dass** eine Lithium-Ionen oder eine Feststoffbatterie als am Fahrzeug mitgeführte Batterie vorgesehen ist.

## Claims

1. An industrial truck with a built-in charger that can be connected to an external voltage source by a cable in order to charge an on-board battery, wherein
1. the built-in charger has a resonant converter with a full bridge, the transistors of which are designed as GaN transistors, wherein the resonant converter has a resonant LLC topology, and
2. a transformer is provided,
3. on the secondary side of which a current doubler with two coupled inductances (Lₐ, L_{b}) is provided.

2. The industrial truck according to claim 1, **characterized in that** the current doubler is equipped with two GaN transistors.

3. The industrial truck according to claim 1 or 2, **characterized in that** the battery to be charged has a voltage of less than 100 V, preferably 80 V or less.

4. The industrial truck according to one of claims 1 to 3, **characterized in that** the output-side current flow has a current of 70 A or more, preferably 100 A or more.

5. The industrial truck according to one of claims 1 to 4, **characterized in that** the built-in charger has a C factor of more than 0.5 C.

6. The industrial truck according to one of claims 1 to 5, **characterized in that** active cooling is provided for the power electronics.

7. The industrial truck according to one of the preceding claims, **characterized in that** a 230 V AC voltage terminal is provided as the external voltage source.

8. The industrial truck according to one of the preceding claims, **characterized in that** a lithium ion or a solid-state battery is provided as a battery carried along on the vehicle.

## Revendications

1. Chariot de manutention avec un chargeur intégré, lequel peut être raccordé à une source de tension externe par un câble pour charger une batterie se trouvant à bord,
1. le chargeur intégré présentant un convertisseur à résonance avec un pont intégral, dont les transistors sont conçus comme des transistors GaN, le convertisseur à résonance présentant une topologie LLC résonnante, et
2. un transformateur étant prévu,
3. sur le côté secondaire duquel un doubleur de courant avec deux inductances couplées (Lₐ, L_{b}) est prévu.

2. Chariot de manutention selon la revendication 1, **caractérisé en ce que** le doubleur de courant est muni de deux transistors GaN.

3. Chariot de manutention selon la revendication 1 ou 2, **caractérisé en ce que** la batterie devant être chargée a une tension inférieure à 100 V, de préférence 80 V ou moins.

4. Chariot de manutention selon l'une des revendications 1 à 3, **caractérisé en ce que** le flux de courant côté sortie a une intensité de courant supérieure ou égale à 70 A, de préférence 100 A ou plus.

5. Chariot de manutention selon l'une des revendications 1 à 4, **caractérisé en ce que** le chargeur intégré a un taux C supérieur à 0,5 C.

6. Chariot de manutention selon l'une des revendications 1 à 5, **caractérisé en ce qu'un** refroidissement actif est prévu pour l'électronique de puissance.

7. Chariot de manutention selon l'une des revendications précédentes, **caractérisé en ce qu'un** branchement de tension alternative 230 V est prévu comme source de tension externe.

8. Chariot de manutention selon l'une des revendications précédentes, **caractérisé en ce qu'**une batterie lithium-ion ou une batterie solide est prévue comme batterie transportée à bord du véhicule.
